# EUROPÄISCHE PATENTANMELDUNG

(11) **EP 4 614 986 A1**
(43) Veröffentlichungstag der Anmeldung: **10.09.2025**
(21) Anmeldenummer: 24161215.9
(22) Anmeldetag: 04.03.2024
(51) Int. Cl.: H04N 21/239, H04N 21/262, H04N 21/418, H04N 21/858, H04N 21/658, H04W 4/80

(54) **VERFAHREN ZUR KOPIERGESCHÜTZTEN WIEDERGABE VON DATEN MIT TAGS**

(71) Anmelder: ise Individuelle Software und Elektronik GmbH, 26122 Oldenburg (DE)
(72) Erfinder: SAHM, Christoph, 26131 Oldenburg (DE); JENNINGS, Eoghan, 29353 Ahnsbeck (DE)
(74) Vertreter: Angerhausen, Christoph

(57) **Zusammenfassung**

Ausführungsformen der Erfindung umfassen ein Verfahren, umfassend: Einlesen, durch einen Client, eines Tags, der einen eindeutigen Bezeichner enthält; Übermitteln des eindeutigen Bezeichners des Tags an einen Server; Nachschlagen, durch den Server, einer Zeitangabe anhand des eindeutigen Bezeichners des Tags; falls die Zeitangabe einen bereits eingetretenen oder innerhalb eines Schwellwerts eintretenden Zeitpunkt anzeigt, Nachschlagen einer Webadresse anhand des eindeutigen Bezeichners des Tags, und Übermitteln der Webadresse an den Client; Übermitteln der Webadresse durch den Client an ein Abspielgerät; Anfordern, durch das Abspielgerät, von Daten, die mit der Webadresse assoziiert sind, von dem Server; und Übermitteln der Daten von dem Server an das Abspielgerät.

## Beschreibung

### TECHNISCHES GEBIET

Die hier offenbarte Erfindung liegt auf dem technischen Gebiet der Verbraucherelektronik, insbesondere dem programmierbaren Abspielen von Video- und/oder Audiodaten auf einem Abspielgerät.

### HINTERGRUND

Im Stand der Technik sind Tags bekannt, die von einem mobilen Gerät, etwa einem Smartphone, eingelesen werden können und eine Kennung bereitstellen. Mit dieser Kennung kann das mobile Gerät ein Medienabspielgerät ansteuern, um der Kennung zugeordnete Daten auf dem Medienabspielgerät wiederzugeben.

Ein Tag ist eine Vorrichtung zum Speichern einer Kennung. Tags können eine zur Handhabung durch einen Anwender geeignete Form aufweisen und etwa die Größe und Form einer herkömmlichen CD oder eines Bierdeckels oder anderen geometrischen flachen oder auch dreidimensionalen Form aufweisen. Alternativ können Tags stationär und sichtbar oder unsichtbar an oder in einem Gebäude angebracht sein. Eine Kennung kann ausgelesen werden über ein Funkprotokoll wie Near Field Communication (NFC) oder Bluetooth, oder aber über optische Übertragung; im letzten Fall kann die Kennung in Form eines QR-Codes gezeigt sein.

EP 3 793 139 A1 offenbart ein System für die Gebäudesteuerung, mit einer Mehrzahl optisch unterschiedlicher und jeweils drahtlos auslesbarer NFC-Tags, die als voneinander unabhängige Elemente beliebig miteinander kombinierbar sind und einander zugeordnet werden können, und mit einem Endgerät, das eine NFC-Schnittstelle aufweist und dazu eingerichtet ist, eine in einem Speicher des NFC-Tags hinterlegte digitale Kennung über die NFC-Schnittstelle auszulesen, wobei das Endgerät eine Funkschnittstelle zu einem Busankoppler eines Gebäudenetzwerks und/oder zu einem Medienabspielgerät aufweist und dazu eingerichtet ist, die digitale Kennung oder einen mit der digitalen Kennung verknüpften Steuerbefehl, der vorzugsweise ein dynamischer Steuerbefehl ist, an den Busankoppler und/oder an das Medienabspielgerät zu übertragen.

EP 3 793 140 A1 offenbart eine Anordnung für die Wiedergabe von Medien in einem Gebäudenetzwerk, wobei die Anordnung ein Wiedergabegerät mit einer NFC-Schnittstelle und eine Mehrzahl drahtlos auslesbarer NFC-Tags aufweist, die jeweils einen Speicher mit einer darin hinterlegten digitalen Kennung aufweisen, wobei mindestens ein digitaler Inhalt über die digitale Kennung verknüpft ist, und wobei das Wiedergabegerät dazu eingerichtet ist, ein Ausgabegerät zur Erzeugung einer visuellen oder akustischen Ausgabe anzusteuern, den digitalen Inhalt über eine Datenverbindung zu beziehen und abzuspielen.

Der hier offenbarten Erfindung liegt die Aufgabe zugrunde, Anwendern die Möglichkeit zu bieten, mit dem gleichen Tag unterschiedliche Daten durch ein Abspielgerät wiederzugeben.

### ZUSAMMENFASSUNG

Ausführungsformen der Erfindung umfassen ein Verfahren, umfassend: Einlesen, durch einen Client, eines Tags, der einen eindeutigen Bezeichner enthält; Übermitteln des eindeutigen Bezeichners des Tags an einen Server; Nachschlagen, durch den Server, einer Zeitangabe anhand des eindeutigen Bezeichners des Tags; falls die Zeitangabe einen bereits eingetretenen oder innerhalb eines Schwellwerts eintretenden Zeitpunkt anzeigt, Nachschlagen einer Webadresse anhand des eindeutigen Bezeichners des Tags, und Übermitteln der Webadresse an den Client; Übermitteln der Webadresse durch den Client an ein Abspielgerät; Anfordern, durch das Abspielgerät, von Daten, die mit der Webadresse assoziiert sind, von dem Server; und Übermitteln der Daten von dem Server an das Abspielgerät.

Ausführungsformen der Erfindung umfassen ferner einen Server mit darauf gespeicherten Befehlen zum Empfangen eines eindeutigen Bezeichners eines Tags von einem Client; Nachschlagen einer Zeitangabe anhand des eindeutigen Bezeichners des Tags; falls die Zeitangabe einen bereits eingetretenen oder innerhalb eines Schwellwerts eintretenden Zeitpunkt anzeigt, Nachschlagen einer Webadresse anhand des eindeutigen Bezeichners des Tags, und Übermitteln der Webadresse an den Client; und als Antwort auf eine Anforderung eines Abspielgeräts nach Daten, die mit der Webadresse assoziiert sind, Übermitteln der Daten an das Abspielgerät.

Ausführungsformen der Erfindung umfassen außerdem ein computerlesbares Medium mit darauf gespeicherten Befehlen, die, wenn sie von einem oder mehreren Prozessoren ausgeführt werden, eines der hier offenbarten Verfahren durchführen.

### KURZE BESCHREIBUNG DER ZEICHNUNGEN

Figur 1 zeigt ein erfindungsgemäßes System aus mehreren Komponenten, die das Verfahren durchführen.
Figur 2 zeigt ein erfindungsgemäßes Verfahren.

### AUSFÜHRLICHE BESCHREIBUNG

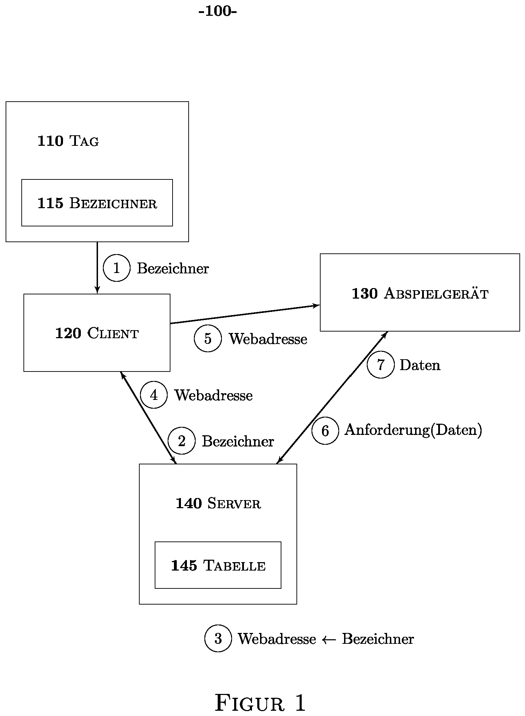

Figur 1 zeigt einen Tag 110, der einen eindeutigen Bezeichner 115 enthält. Der Tag kann ein greifbares mobiles Medium sein, etwa in Form einer CD oder eines Bierdeckels oder einer anderen für einen Anwender greifbaren Form. Der Tag kann alternativ fest installiert sein, etwa an oder in einer Wand oder einem Fenster. Der eindeutige Bezeichner 115 kann auf einem über Funk, etwa NFC oder Bluetooth, zugänglichen Chip kodiert sein, oder in einem sichtbaren QR-Code.

Figur 1 zeigt weiter einen Client 120, der eingerichtet ist, den Tag 110 zu erkennen und/oder den eindeutigen Bezeichner 115 einzulesen (Schritt 1). Der Client 120 verfügt hierzu über eine NFC- oder Bluetoothschnittstelle oder aber über eine optische Einrichtung zur Erkennung und Dekodierung eines QR-Codes. Der Client 120 ist eingerichtet, den eindeutigen Bezeichner 115 einzulesen, wenn er sich in dessen Nähe befindet und Einrichtungen zur Erkennung des eindeutigen Bezeichners 115 auf dem Client 120 aktiviert sind. Der Client 120 kann ein Smartphone oder anderes mobiles Gerät sein, einschließlich einer Fernbedienung, die speziell der Ausführung der hier offenbarten Verfahren dient.

Figur 1 zeigt außerdem einen Server 140. Der Server 140 kann im gleichen Gebäude oder in der näheren Umgebung des Clients angeordnet sein oder auch als Server in einer Cloud / im Internet stehen. Im ersten Fall kann eine Kommunikation mit dem Server ebenfalls über lokale Protokolle - NFC, Bluetooth - erfolgen. Im ersten und im zweiten Fall kann die Kommunikation über das Internet, etwa nach dem HTTP-Protokoll, erfolgen. Der Client 120 übermittelt den von dem Tag 110 eingelesenen eindeutigen Bezeichner 115 an den Server 140 (Schritt 2).

Der Server 140 schlägt anhand des eindeutigen Bezeichners 115 eine Webadresse (Unified Resource Locator, URL) sowie einen oder mehrere Zeitangaben nach, beispielsweise anhand einer Tabelle 145 (Schritt 3). Das Nachschlagen der Webadresse kann dem Nachschlagen der Zeitangabe nachgeordnet sein und etwa lediglich dann erfolgen, wenn die Zeitangaben bestimmte Bedingungen erfüllen. Insbesondere können für einen eindeutigen Bezeichner mehrere Webadressen abgelegt sein, die jeweils einer oder mehreren der Zeitangaben oder auch bestimmten Zeiträumen zugeordnet sind.

Die Zeitangaben können einzelne Zeitstempel umfassen. Der Server 140 vergleicht zunächst die nachgeschlagene Zeitangabe mit einem aktuellen Zeitpunkt. Falls die Zeitangabe kleiner oder gleich dem aktuellen Zeitpunkt ist oder diesen nur um einen vorbestimmten Schwellwert, etwa einige Minuten, übersteigt, schlägt der Server 140 eine mit der Zeitangabe (und somit mit dem eindeutigen Bezeichner) assoziierte Webadresse nach und übermittelt diese an den Client.

Alternativ können mit dem eindeutigen Bezeichner mehrere Zeitangaben assoziiert sein. In diesem Fall prüft der Server 140 nacheinander die vorliegenden Zeitangaben, bis eine Zeitangabe vorgefunden wird, die kleiner oder gleich dem aktuellen Zeitpunkt ist oder diesen nur um den vorbestimmten Schwellwert übersteigt, und übermittelt an den Client 120 diejenige Webadresse, die mit dem betreffenden Zeitpunkt assoziiert ist. Das Prüfen der Zeitangaben kann in aufsteigender Reihenfolge durchgeführt werden.

Als weitere Alternative können die Zeitangaben jeweils einen Start- und einen Endzeitpunkt umfassen. Jeder dieser Zeitpunkte kann als ein Zeitstempel implementiert sein. In diesem Fall prüft der Server 140 nacheinander für jede der Zeitangaben, ob der aktuelle Zeitpunkt zwischen dem Start- und dem Endzeitpunkt liegt, und beendet die Prüfung, sobald eine solche Zeitangabe vorgefunden wurde. Auch bei diesem Vergleich kann ein Schwellwert berücksichtigt werden und ein aktueller Zeitpunkt etwa auch dann innerhalb der Start- und Endzeitpunkte liegen, wenn er tatsächlich um einen Schwellwert außerhalb eines dieser Punkte liegt. Der Server 140 schlägt dann eine Webadresse nach, die mit der betreffenden Zeitangabe assoziiert ist, und übermittelt diese an den Client 120.

Die Zeitangaben können auch eine Kombination aus einzelnen Zeitpunkten einerseits und Start- und Endzeitpunkten andererseits umfassen. So kann der Server bei Vorliegen eines einzelnen Zeitpunks diesen mit dem aktuellen Zeitpunkt vergleichen, einschließlich einem Schwellwertvergleich, und kann bei Vorliegen eines Start- und eines Endzeitpunkts den definierten Zeitraum mit dem aktuellen Zeitpunkt vergleichen.

Als weitere Alternative zu einzelnen oder paarweisen Zeitpunkten können die Zeitangaben auch Timer umfassen. In diesem Fall unterbleibt eine Vergleichsprüfung mit einem aktuellen Zeitpunkt. Stattdessen prüft der Server 140 lediglich, ob der Timer bereits abgelaufen ist oder innerhalb eines Schwellwerts abläuft. Auch in diesem Ausführungsbeispiel können für den eindeutigen Bezeichner mehrere Timer oder auch eine Kombination von Timern, Zeitpunkten und Zeiträumen (Start- und Endzeitpunkte) gespeichert sein, die der Server 140 nacheinander prüft, bis ein relevanter Eintrag gefunden wurde oder keine weiteren Timer, Zeitpunkte etc. vorgefunden werden.

In einer Ausführungsform setzt der Server 140 bei der Auswahl einer Webadresse ein Flag für diese Adresse, um anzuzeigen, dass diese Webadresse für den betreffenden Tag übermittelt worden ist. Das Übermitteln der Webadresse kann wiederum unter der Bedingung erfolgen, dass ein solches Flag nicht gesetzt ist; auf diese Weise kann sichergestellt werden, dass jede Webadresse für einen gegebenen eindeutigen Bezeichner eines Tags nur einmal übermittelt wird.

Die Webadresse adressiert eine konkrete Audio- oder Videodatei. Die Webadresse kann eine im Internet gültige Adresse oder eine Adresse, die in einem lokalen Netz gültig ist, sein. Nach dem Übermitteln der Webadresse (Schritt 4) übermittelt der Client 120 die Webadresse an ein Abspielgerät 130 (Schritt 5). Die Übermittlung an das Abspielgerät 130 erfolgt nicht durch den Server 140, da das konkrete Abspielgerät nicht fest vorbestimmt ist, sondern durch den Client 120 ausgewählt werden kann. Beispielsweise können in der näheren Umgebung des Clients 120 mehrere Abspielgeräte 130 stehen, und ein Anwender kann sich für ein bestimmtes Abspielgerät entscheiden, indem er sich diesem nähert und der Client 120 dieses aufgrund der Nähe mittels NFC, Bluetooth oder QR-Code als erstes erkennt oder indem ein Anwender des Clients 120 ein Abspielgerät aus einer auf dem Client 120 angezeigten Liste auswählt.

Das Abspielgerät 130 empfängt die übermittelte Webadresse. In einer Ausführungsform kann auf dem Abspielgerät 130 eine Anwendung laufen, die aus der Struktur der Webadresse erkennt, dass dieses zur Weitergabe an den Server 140 geeignet ist. Beispielsweise kann diese Anwendung über eine Adresse des Servers 140 verfügen und geeignete Befehle zur Behandlung der Webadresse enthalten. Anhand dieser Befehle übermittelt das Abspielgerät 130 eine Anfrage an den Server 140 (Schritt 6). Die Anfrage enthält die Webadresse.

Das Abspielgerät 130 und der Client 120 können in einer Ausführungsform identisch sein. In diesem Fall werden die auf dem Client 120 und dem Abspielgerät 130 ausgeführten Schritte durch jeweilige Client- und Wiedergabeprozesse durchgeführt, und Übermittlungen zwischen dem Client 120 und dem Abspielgerät 130 umfassen die Übertragung entsprechender Daten zwischen den Prozessen.

Der Server 140 empfängt die Anfrage des Abspielgeräts 130 und schlägt anhand der übermittelten Webadresse die angeforderten Daten nach, entweder im Internet oder lokal auf dem Server, und liefert diese an das Abspielgerät 130 zurück (Schritt 7). Das Abspielgerät 130 gibt die Daten wieder.

Die Daten können einen Livestream umfassen. In diesem Fall umfassen die für die Daten hinterlegten Zeitangaben auf dem Server einen Start- und einen Endzeitpunkt, die mit dem Beginn und dem Ende des Livestreams übereinstimmen. Alternativ kann lediglich der Startzeitpunkt abgelegt sein. Ermittelt der Server 140 in Schritt 3, dass ein aktueller Zeitpunkt innerhalb des durch die Zeitangaben definierten Livestreams liegt, kann er später in Schritt 7 den Livestream ab dem dann aktuellen Zeitpunkt übermitteln.

Das oben erläuterte Übermitteln des eindeutigen Bezeichners des Tags durch den Client 120 an den Server 140 (Schritt 2) kann ferner Übermitteln eines eindeutigen Bezeichners des Clients umfassen. Der eindeutige Bezeichner des Clients kann beispielsweise ebenfalls eine Webadresse (URL) sein, die den Client in dem lokalen Netzwerk oder auch im Internet identifiziert. Der eindeutige Bezeichner des Clients 120 wird von dem Server 140 in Assoziation mit dem eindeutigen Bezeichner des Tags gespeichert. Ferner kann der Server 140 in regelmäßigen Abständen oder auch auf einen Befehl hin sämtliche gespeicherten eindeutigen Bezeichner von Tags auf mit diesen assoziierte eindeutige Bezeichner von Clients prüfen und ferner ermitteln, ob für diese Bezeichner Zeitangaben gespeichert sind, die einen aktuellen Zeitpunkt umfassen oder demnächst, also innerhalb eines Schwellwerts, beginnen. Der Server 140 kann auch einfach alle Zeitangaben dieser Bezeichner ermitteln, die noch in der Zukunft liegen. Der Server 140 kann anschließend für sämtliche dieser Zeitangaben anhand der assoziierten eindeutigen Bezeichner der Clients eine Nachricht an die betreffenden Clients erzeugen und diese über die anstehenden Zeitpunkte und die zur Verfügung stehenden Daten benachrichtigen. Sofern der eindeutige Bezeichner eines Clients zu dessen Benachrichtigung nicht ausreicht, können in Schritt 2 auch weitere Angaben zu dem Client ermittelt oder übermittelt werden, etwa eine IP-Adresse oder eine Kennung, unter der ein Client in einem vorgegebenen Netzwerk, einschließlich einem sozialen Netzwerk, erreichbar ist.

Eine Benachrichtigung von Clients kann auch als Antwort auf eine Aktualisierung von Zeitangaben und/oder Webadressen durchgeführt werden. Der Server kann von einem Administrator konfiguriert werden, indem dieser neue Webadressen speichert. Die Webadressen können alte Webadressen ersetzen oder diesen hinzugefügt werden. Die Webadressen können mit bereits gespeicherten eindeutigen Bezeichnern von Tags und/oder Clients assoziiert werden. Außerdem können die mit diesen Webadressen assoziierten Zeitangaben aktualisiert werden beziehungsweise neu definiert werden. Als Reaktion auf solche Änderungen oder per ausdrücklichen Befehl des Administrators können die Clients benachrichtigt werden.

In einer Ausführungsform kann der Client 120 in Schritt 5 neben der Webadresse auch den eindeutigen Bezeichner dieses Clients übermitteln. Das Abspielgerät übermittelt dann in Schritt 6 in seiner Anforderung nach Daten den Bezeichner des Clients an den Server, der wiederum prüft, ob der übermittelte eindeutige Bezeichner mit dem in Schritt 2 übermittelten Bezeichner übereinstimmt; der Server 140 kann auf diese Weise sicherstellen, dass die Daten nur dann an das Abspielgerät 130 ausgegeben werden, wenn dieses von dem gleichen Client 120 kontaktiert wurde, der zuvor mit dem Server 140 kommunizierte.

In einer Ausführungsform kann der Server 140 nach dem Abspielen der Daten durch das Abspielgerät 130 den eindeutigen Bezeichner des Clients für den betreffenden Tag lokal löschen; Tags sollen grundsätzlich übertragbar sein und nicht an bestimmte Clients gebunden sein. Das Löschen kann als Antwort auf eine Benachrichtigung des Servers 140 durch das Abspielgerät 130 erfolgen, beispielsweise unmittelbar nach dem Abspielen. Alternativ kann der Server 140 den Bezeichner löschen, wenn die Zeitangaben eines Tags beziehungsweise eines entsprechenden eindeutigen Bezeichners eines Tags in der Vergangenheit liegen und die entsprechenden Daten beziehungsweise deren Webadresse somit nicht mehr aktuell sind.

Alternativ kann von einem Löschen von Bezeichnern abgesehen werden, etwa wenn Abspielgerät 130 und Client 120 identisch sind.

Die Erfindung ermöglicht somit die Bereitstellung von wechselnden Daten für Anwender, die in Besitz eines Tags sind. Je nach Zeitpunkt und/oder je nach Entscheidung des Datenproviders kann der Tag von dem Anwender verwendet werden, um unterschiedliche Daten abzuspielen, und Anwender können auf anstehende oder aktuell erhältliche Daten aufmerksam gemacht werden. So kann ein Provider Clients, die dem Server bekannt sind, Benachrichtigungen senden über eine derzeit abspielbare Studioaufnahme oder ein in Kürze abspielbares Livekonzert. Beides kann über bestimmte Zeitangaben gesteuert werden, die dem Anwender ebenfalls mitgeteilt werden. Der Anwender benötigt zur Wiedergabe dieser wechselnden Daten keine weiteren Mittel als den Tag, mit dem diese Daten assoziiert sind, und einen Client (etwa ein Smartphone).

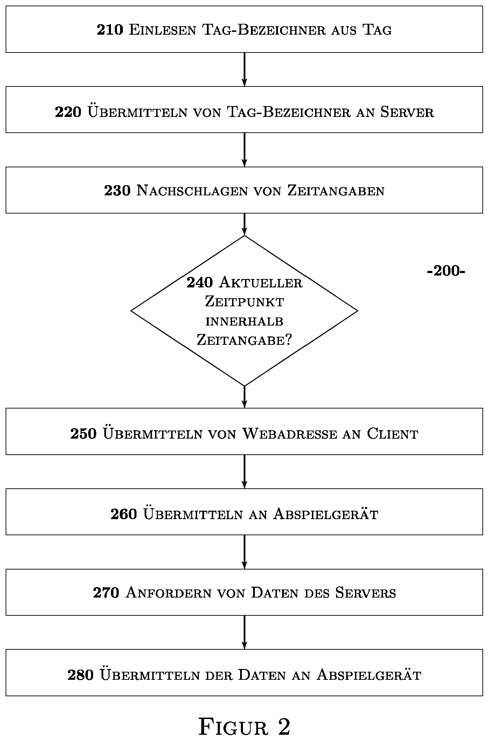

Figur 2 zeigt ein Verfahren 200 zur Verwendung eines Tags. Die Schritte des Verfahrens können durch die in Figur 1 gezeigten Komponenten ausgeführt werden, nämlich durch einen oder mehrere Tags, Clients und Abspielgeräte sowie durch einen Server.

In Schritt 210 liest ein Client einen eindeutigen Bezeichner eines Tags ein. Beispielsweise kann eine Verbindung zwischen dem Client und dem Tag automatisch über NFC oder Bluetooth aufgebaut werden, wenn sich Client und Tag in der Nähe zueinander befinden. Alternativ kann der Tag einen QR-Code aufweisen, der mit dem Client eingelesen wird. Der Tag enthält einen eindeutigen Bezeichner, der beispielsweise auf einem Microchip des Tags gespeichert ist. Der eindeutige Bezeichner des Tags wird in Schritt 220 von dem Client an den Server übermittelt.

In Schritt 230 schlägt der Server anhand des eindeutigen Bezeichners eine Zeitangabe nach. Die Zeitangabe kann, wie oben beschrieben, ein einzelner Zeitpunkt oder ein Zeitraum mit Start- und Endzeitpunkt oder auch ein Timer sein. Für einen Bezeichner können mehrere solche Zeitangaben vorgesehen sein. Diese sind vorzugsweise mit einer jeweiligen Webadresse assoziiert, die ebenfalls lokal in dem Server gespeichert ist, etwa in einer Tabelle.

Der Server prüft in Schritt 240, ob ein aktueller Zeitpunkt in die nachgeschlagene Zeitangabe fällt. Besteht diese aus einem einzelnen Zeitpunkt, kann geprüft werden, ob sie einen älteren Zeitpunkt als den aktuellen Zeitpunkt bezeichnet, oder ob sie innerhalb eines vorgegebenen Schwellwerts eintritt. Bei einem Zeitraum kann geprüft werden, ob der aktuelle Zeitpunkt innerhalb des Zeitraumes liegt. Liegen mehrere Zeitangaben vor, kann über diese iteriert werden, bis eine Zeitangabe vorgefunden ist, die den aktuellen Zeitpunkt umfasst, oder bis keine weiteren Zeitangaben für den betreffenden Tag / den eindeutigen Bezeichner dieses Tags vorliegen.

Wurde eine solche Zeitangabe gefunden, übermittelt der Server in Schritt 250 eine mit dieser Zeitangabe assoziierte Webadresse an den Client. Dieser übermittelt die Webadresse in Schritt 260 an ein Abspielgerät; das Abspielgerät kann von einem Anwender des Clients ausgewählt werden oder durch Annäherung des Clients an ein Abspielgerät festgelegt werden. Das Festlegen mittels Annähern kann ebenfalls per NFC oder Bluetooth oder einschlägige Funkprotokolle vorgenommen werden.

Das Abspielgerät übermittelt in Schritt 270 eine Anforderung an den Server, um von diesem die eigentlichen Daten zu erhalten. Die Anforderung kann die Webadresse enthalten. In bestimmten Ausführungsformen können weitere Angaben übermittelt werden, beispielsweise der oben beschriebene eindeutige Bezeichner des Clients. Schließlich übermittelt der Server in Schritt 280 die geforderten Daten an das Abspielgerät, das diese wiedergibt.

### Bezugszeichen

- 110: Tag
- 115: eindeutiger Bezeichner
- 120: Client
- 130: Abspielgerät
- 140: Server
- 145: Tabelle
- 200: Verfahren

## Patentansprüche

1. Verfahren, umfassend:
Einlesen, durch einen Client, eines Tags, der einen eindeutigen Bezeichner enthält;
Übermitteln des eindeutigen Bezeichners des Tags an einen Server;
Nachschlagen, durch den Server, einer Zeitangabe anhand des eindeutigen Bezeichners des Tags;
falls die Zeitangabe einen bereits eingetretenen oder innerhalb eines Schwellwerts eintretenden Zeitpunkt anzeigt, Nachschlagen einer Webadresse anhand des eindeutigen Bezeichners des Tags, und Übermitteln der Webadresse an den Client;
Übermitteln der Webadresse durch den Client an ein Abspielgerät;
Anfordern, durch das Abspielgerät, von Daten, die mit der Webadresse assoziiert sind, von dem Server; und
Übermitteln der Daten von dem Server an das Abspielgerät.

2. Verfahren nach Anspruch 1, wobei der Tag ein Near Field Communication, NFC, Tag ist.

3. Verfahren nach Anspruch 1 oder 2, wobei die Zeitangabe einen Zeitstempel oder einen Timer umfasst.

4. Verfahren nach einem der vorstehenden Ansprüche, ferner umfassend Nachschlagen einer zweiten Zeitangabe anhand des eindeutigen Bezeichners des Tags, wobei das Nachschlagen der Webadresse ferner unter der Bedingung erfolgt, dass die zweite Zeitangabe einen noch nicht eingetretenen Zeitpunkt anzeigt.

5. Verfahren nach Anspruch 4, wobei die Daten eine Livestream umfassen, dessen Länge der Differenz aus der ersten und der zweiten Zeitangabe entspricht.

6. Verfahren nach einem der vorstehenden Ansprüche, wobei die Daten einen Livestream umfassen und das Übermitteln der Daten ab dem aktuellen Zeitpunkt erfolgt.

7. Verfahren nach einem der vorstehenden Ansprüche, wobei das Übermitteln des eindeutigen Bezeichners des Tags an den Server ferner Übermitteln eines eindeutigen Bezeichners des Clients umfasst und der Server den eindeutigen Bezeichner des Tags und den eindeutigen Bezeichner des Clients speichert, wobei das Verfahren ferner umfasst:
Empfangen und Speichern, durch den Server, einer Zeitangabe und einer oder mehrerer eindeutiger Bezeichner für Tags; und
Benachrichtigen des Clients über die Zeitangabe und/oder den Tag.

8. Verfahren nach einem der vorstehenden Ansprüche, ferner umfassend, nach dem Einlesen des Tags durch den Client:
Übermitteln eines eindeutigen Bezeichners des Clients an das Abspielgerät;
wobei das Übermitteln des eindeutigen Bezeichners des Tags an den Server ferner Übermitteln des eindeutigen Bezeichners des Clients an den Server umfasst;
wobei das Anfordern von Daten von dem Server durch das Abspielgerät ferner Übermitteln des eindeutigen Bezeichners des Clients an den Server umfasst; und
wobei das Übermitteln der Daten von dem Server an das Abspielgerät unter der Bedingung erfolgt, dass der von dem Abspielgerät übermittelte eindeutige Bezeichner des Clients mit dem von dem Client übermittelten eindeutigen Bezeichner des Clients übereinstimmt.

9. Verfahren nach Anspruch 8, wobei der eindeutige Bezeichner des Clients eine Webadresse ist, die den Client identifiziert.

10. Verfahren nach Anspruch 8 oder 9, ferner umfassend:
Abspielen der Daten durch das Abspielgerät; und
Löschen des eindeutigen Bezeichners des Clients für den eindeutigen Bezeichner des Tags durch den Server nach dem Abspielen der Daten.

11. Verfahren nach einem der vorstehenden Ansprüche, wobei der Client und das Abspielgerät identisch sind.

12. Verfahren nach einem der vorstehenden Ansprüche, wobei das Nachschlagen der Zeitangabe ferner umfasst, die Zeitangabe aus mehreren Zeitangaben auszuwählen, die mit dem eindeutigen Bezeichner des Tags assoziiert sind, und wobei das Nachschlagen der Webadresse ferner umfasst, eine Webadresse nachzuschlagen, die mit dem eindeutigen Bezeichner und der ausgewählten Zeitangabe assoziiert ist.

13. Server, umfassend einen Speicher mit darauf gespeicherten Befehlen zum:
Empfangen eines eindeutigen Bezeichners eines Tags von einem Client;
Nachschlagen einer Zeitangabe anhand des eindeutigen Bezeichners des Tags;
Falls die Zeitangabe einen bereits eingetretenen oder innerhalb eines Schwellwerts eintretenden Zeitpunkt anzeigt, Nachschlagen einer Webadresse anhand des eindeutigen Bezeichners des Tags, und Übermitteln der Webadresse an den Client; und
als Antwort auf eine Anforderung eines Abspielgeräts nach Daten, die mit der Webadresse assoziiert sind, Übermitteln der Daten an das Abspielgerät.

14. Server nach Anspruch 13, wobei die Zeitangabe einen Zeitstempel oder einen Timer umfasst.

15. Computerlesbares Medium mit darauf gespeicherten Befehlen, die, wenn sie von einem Prozessor ausgeführt werden, das Verfahren nach einem der Ansprüche 1 bis 12 ausführen.

## Geänderte Patentansprüche

### Geänderte Patentansprüche gemäss Regel 137(2) EPÜ.

1. Verfahren (200), umfassend:
Einlesen (210), durch einen Client, eines Tags, der einen eindeutigen Bezeichner enthält;
Übermitteln (220) des eindeutigen Bezeichners des Tags an einen Server;
Nachschlagen (230), durch den Server, einer Zeitangabe anhand des eindeutigen Bezeichners des Tags;
falls die Zeitangabe einen bereits eingetretenen oder innerhalb eines Schwellwerts eintretenden Zeitpunkt anzeigt (240), Nachschlagen einer Webadresse anhand des eindeutigen Bezeichners des Tags, und Übermitteln (250) der Webadresse an den Client;
Übermitteln (260) der Webadresse durch den Client an ein Abspielgerät;
Anfordern (270), durch das Abspielgerät, von Daten, die mit der Webadresse assoziiert sind, von dem Server; und
Übermitteln (280) der Daten von dem Server an das Abspielgerät.

2. Verfahren (200) nach Anspruch 1, wobei der Tag ein Near Field Communication, NFC, Tag ist.

3. Verfahren (200) nach Anspruch 1 oder 2, wobei die Zeitangabe einen Zeitstempel oder einen Timer umfasst.

4. Verfahren (200) nach einem der vorstehenden Ansprüche, ferner umfassend Nachschlagen einer zweiten Zeitangabe anhand des eindeutigen Bezeichners des Tags, wobei das Nachschlagen der Webadresse ferner unter der Bedingung erfolgt, dass die zweite Zeitangabe einen noch nicht eingetretenen Zeitpunkt anzeigt.

5. Verfahren (200) nach Anspruch **4,** wobei die Daten eine Livestream umfassen, dessen Länge der Differenz aus der ersten und der zweiten Zeitangabe entspricht.

6. Verfahren (200) nach einem der vorstehenden Ansprüche, wobei die Daten einen Livestream umfassen und das Übermitteln (280) der Daten ab dem aktuellen Zeitpunkt erfolgt.

7. Verfahren (200) nach einem der vorstehenden Ansprüche, wobei das Übermitteln (220) des eindeutigen Bezeichners des Tags an den Server ferner Übermitteln eines eindeutigen Bezeichners des Clients umfasst und der Server den eindeutigen Bezeichner des Tags und den eindeutigen Bezeichner des Clients speichert, wobei das Verfahren (200) ferner umfasst:
Empfangen und Speichern, durch den Server, einer Zeitangabe und einer oder mehrerer eindeutiger Bezeichner für Tags; und
Benachrichtigen des Clients über die Zeitangabe und/oder den Tag.

8. Verfahren (200) nach einem der vorstehenden Ansprüche, ferner umfassend, nach dem Einlesen des Tags durch den Client:
Übermitteln eines eindeutigen Bezeichners des Clients an das Abspielgerät;
wobei das Übermitteln (220) des eindeutigen Bezeichners des Tags an den Server ferner Übermitteln des eindeutigen Bezeichners des Clients an den Server umfasst;
wobei das Anfordern (270) von Daten von dem Server durch das Abspielgerät ferner Übermitteln des eindeutigen Bezeichners des Clients an den Server umfasst; und
wobei das Übermitteln (280) der Daten von dem Server an das Abspielgerät unter der Bedingung erfolgt, dass der von dem Abspielgerät übermittelte eindeutige Bezeichner des Clients mit dem von dem Client übermittelten eindeutigen Bezeichner des Clients übereinstimmt.

9. Verfahren (200) nach Anspruch 8, wobei der eindeutige Bezeichner des Clients eine Webadresse ist, die den Client identifiziert.

10. Verfahren (200) nach Anspruch 8 oder 9, ferner umfassend:
Abspielen der Daten durch das Abspielgerät; und
Löschen des eindeutigen Bezeichners des Clients für den eindeutigen Bezeichner des Tags durch den Server nach dem Abspielen der Daten.

11. Verfahren (200) nach einem der vorstehenden Ansprüche, wobei der Client und das Abspielgerät identisch sind, wobei die auf dem Client und dem Abspielgerät ausgeführten Schritte durch jeweilige Client- und Wiedergabeprozesse durchgeführt werden und Übermittlungen zwischen dem Client und dem Abspielgerät die Übertragung entsprechender Daten zwischen den Prozessen umfassen.

12. Verfahren (200) nach einem der vorstehenden Ansprüche, wobei das Nachschlagen der Zeitangabe ferner umfasst, die Zeitangabe aus mehreren Zeitangaben auszuwählen, die mit dem eindeutigen Bezeichner des Tags assoziiert sind, und wobei das Nachschlagen der Webadresse ferner umfasst, eine Webadresse nachzuschlagen, die mit dem eindeutigen Bezeichner und der ausgewählten Zeitangabe assoziiert ist.

13. Server (140), umfassend einen Speicher mit darauf gespeicherten Befehlen zum:
Empfangen eines eindeutigen Bezeichners (115) eines Tags (110) von einem Client (120);
Nachschlagen einer Zeitangabe anhand des eindeutigen Bezeichners (115) des Tags (110);
Falls die Zeitangabe einen bereits eingetretenen oder innerhalb eines Schwellwerts eintretenden Zeitpunkt anzeigt, Nachschlagen einer Webadresse anhand des eindeutigen Bezeichners (115) des Tags (110), und Übermitteln der Webadresse an den Client; und
als Antwort auf eine Anforderung eines Abspielgeräts (130) nach Daten, die mit der Webadresse assoziiert sind, Übermitteln der Daten an das Abspielgerät (130).

14. Server (140) nach Anspruch 13, wobei die Zeitangabe einen Zeitstempel oder einen Timer umfasst.

15. Computerlesbares Medium mit darauf gespeicherten Befehlen, die, wenn sie von einem Prozessor ausgeführt werden, das Verfahren nach einem der Ansprüche 1 bis 12 ausführen.
